# EUROPEAN PATENT APPLICATION

(11) **EP 4 657 683 A1**
(43) Date of publication of application: **03.12.2025**
(21) Application number: 24382573.4
(22) Date of filing: 29.05.2024
(51) Int. Cl.: H02G 3/04, F16G 13/16

(54) **EXTENDABLE TUBULAR GUIDE FOR CABLES**

(71) Applicant: Unex Aparellaje Electrico S.L., 08005 Barcelona (ES)
(72) Inventor: GARCIA VILLANUEVA, Amanda, 08005 Barcelona (ES)
(74) Representative: Curell Suñol S.L.P.

(57) **Abstract**

Extendable tubular guide (1) for cables, formed by a plurality of tubular modules (2) coupled along an axial direction. The tubular modules (2) can pivot in a limited manner to curve the tubular guide (1) and can move in a limited manner in the axial direction so as to extend the length of the tubular guide (1). The tubular modules (2) comprise a through groove in the axial direction and can rotate relatively about the axial direction. The relative rotation of the tubular modules (2) allows at least two positions of the tubular guide (1): an open position, in which the through grooves of all the tubular modules (2) are aligned forming a continuous cable-passage groove (7); and at least one closed position, in which a relative rotation of at least one of the tubular modules (2) has been performed, interrupting the continuity of the cable-passage groove (7).

## Description

### Field of the Invention

The invention is comprised in the field of extendable tubular guides for cables, which are normally used for guiding or organizing signal cables or electric cables. The invention is applied particularly, although not exclusively, for guiding bundles of optic fiber cables and other cables in data centers.

More specifically, the invention relates to an extendable tubular guide for cables, of the type formed by a plurality of tubular modules mutually coupled in series along an axial direction, each of said tubular modules comprising a tubular wall delimiting a conduit segment for cables, said conduit segments of the mutually coupled tubular modules forming a continuous conduit for cables along the entire length of the tubular guide, and each of said mutually coupled tubular modules being able to pivot in a limited manner with respect to the adjacent tubular module to which it is coupled, so as to curve the tubular guide, and being able to move in a limited manner in the axial direction with respect to the adjacent tubular module to which it is coupled, so as to extend the length of the tubular guide.

### State of the Art

EP0676840A1, EP0965784A1, and WO2023247071A1 disclose different extendable tubular guides for cables of the type indicated above.

In extendable tubular guides for cables of this type, cables are introduced in the conduit by passing the cables in the axial direction of the guide, through the ends of the guide. In installations in which a movement or redistribution of cables already connected to the equipment or the incorporation of cables having connection terminals at their ends is envisaged, the introduction of cables in the conduit of the guide in the axial direction entails a problem because it requires disconnecting the cables, and furthermore it may be difficult to pass a cable with a terminal at its end through the conduit of the guide when other cables are already in the conduit.

### Description of the Invention

The purpose of the invention is to provide an extendable tubular guide for cables of the type indicated above, which allows reorganizing, removing, or adding cables in a simpler manner, without reducing the level of protection of the cables contained in the tubular guide and without increasing the cost of the tubular guide.

This purpose is achieved by means of an extendable tubular guide for cables of the type indicated above, characterized in that each of the tubular modules comprises a continuous through groove, extending in the axial direction and going through the tubular wall along the entire length of said tubular module, and in that said tubular modules are formed such that each of said mutually coupled tubular modules can perform a relative rotation, about the axial direction, with respect to the adjacent tubular module to which it is coupled, said relative rotation of the tubular modules allowing at least two positions of the tubular guide: an open position, in which said through grooves of all the mutually coupled tubular modules are aligned forming a continuous cable-passage groove along the entire length of the tubular guide; and at least one closed position, in which a relative rotation of at least one of said tubular modules has been performed, such that the through groove of the tubular module that has been rotated is not aligned with the through grooves of the other tubular modules, and such that the tubular wall of the tubular module that has been rotated interrupts the continuity of said cable-passage groove.

This solution according to the invention allows the lateral introduction of a cable in the conduit of the tubular guide by moving the cable in a transverse direction and causing it to pass through the cable-passage groove formed by the aligned through grooves of all the tubular modules. To that end, the tubular guide must be in the open position. This open position is very easily obtained by rotating the tubular modules relatively. The cables introduced in the conduit of the tubular guide are well protected since an external body that may damage them can hardly enter through the cable-passage groove. To prevent the cables from coming out of the conduit of the tubular guide, it is sufficient to rotate at least one of the tubular modules to put the tubular guide in the closed position, in which the module that has been rotated breaks the continuity of the cable-passage groove, whereby a cable can no longer pass laterally through said cable-passage groove. Moreover, the solution according to the invention does not involve an increased product cost. It can be implemented by modifying known tubular guides, incorporating the through groove in the tubular modules.

Preferably, each of the tubular modules comprises a first coupling segment and a second coupling segment, opposite said first coupling segment, having a shape, in a section orthogonal to the axial direction, corresponding to the shape of said first coupling segment, said first coupling segment of each tubular module being fitted into said second coupling segment of the adjacent tubular module in the axial direction. The first coupling segment and the second coupling segment have fitting portions formed such that the open position and the closed position of the tubular guide are, each, a stable position, and such that said fitting portions elastically deform, as a result of the relative rotation of at least one of the tubular modules, to transition from said open position to said closed position and vice versa. This configuration provides stable angular positions of each of the tubular modules about the axial direction, which maintain the open position and the closed position of the tubular guide. The introduction of the cables in the conduit of the tubular guide in the open position is thereby facilitated, and moreover the inability of the cables to come out of the conduit in the closed position is ensured.

Embodiments in which the sectional shape of the first coupling segment and the second coupling segment is circular, and in which the fitting portions are tabs and corresponding housings formed in the tubular wall in each of the two coupling segments, are possible. However, in preferred embodiments, the first coupling segment has a non-circular shape, in a section orthogonal to the axial direction, and the second coupling segment has a non-circular shape, in a section orthogonal to the axial direction, corresponding to the shape of said first coupling segment. In these embodiments, the fitting portions providing the stable positions are the first coupling segment and second coupling segment themselves with the first segment fitted into the second segment by shape complementarity. The tubular wall of the tubular modules is sized such that its sectional shape deforms elastically, due to the play provided by the through groove, as a result of the relative rotation of at least one of the tubular modules to transition from the open position to the closed position and vice versa. This configuration is simple, provides very stable open and closed positions, and allows transitioning from one of these positions to the other easily and vice versa, by rotating the tubular modules relatively against the opposing force due to the elastic deformation of the tubular wall.

Preferably, the non-circular shape of the first coupling segment and of the second coupling segment is a regular polygon with rounded vertices. This geometry provides a good stability in the open position and in the closed position of the tubular guide, while at the same time facilitates the relative rotation of the tubular modules as a result of elastic deformation. More preferably, the regular polygon is an octagon with rounded vertices. This geometry provides an optimal equilibrium between ease of rotation of the tubular modules and maintenance of the open position and the closed position against unexpected external forces.

In the preferred embodiments, the first coupling segment and the second coupling segment in each tubular module are adjacent to one another, have the same length in the axial direction, and are joined by a shoulder which increases the radial dimension of said second coupling segment with respect to the radial dimension of said first coupling segment. The first coupling segment has at its end a first rim projecting radially outwards, said first rim being separated, by a first gap, from the tubular wall of the second coupling segment of the adjacent tubular segment on one side. The second coupling segment has at its end a second rim projecting radially inwards, said second rim being separated, by a second gap, from the tubular wall of the second coupling segment of the adjacent tubular segment on the other side. In a compacted position of the tubular guide in the axial direction, the first rim of an adjacent tubular module on one side rests abutting one side of the shoulder of a tubular module in the axial direction, and the second rim of an adjacent tubular module on the other side rests abutting the other side of the same shoulder in the axial direction. In an expanded position of the tubular guide in the axial direction, the first rim of a tubular module rests abutting the second rim of an adjacent tubular module in the axial direction. This configuration is geometrically simple and provides a good robustness of the tubular guide and effective stops for the relative movement of the tubular modules in the axial direction. The mentioned gaps allow each tubular module to be able to pivot up to a limited angle, so as to curve the tubular guide.

Preferably, the second rim, in the second coupling segment of each tubular module, is formed such that it deforms elastically to introduce the first coupling segment into said second coupling segment, causing the first rim to pass through the ring formed by said second rim. This configuration allows coupling the tubular modules by pressure easily. Therefore, a tubular guide with the desired length can be easily assembled by coupling the number of tubular modules required to reach said length.

Preferably, the second rim has notches to facilitate the elastic deformation thereof and to make it easier to introduce the first coupling segment into the second coupling segment.

Preferably, when the non-circular shape of the first coupling segment and of the second coupling segment is a regular polygon with rounded vertices, the notches are formed in the rounded vertices of the regular polygon. This configuration facilitates the elastic deformation of the second rim to increase the size of the ring formed by this rim and to make it even easier to introduce the first coupling segment into the second coupling segment.

In the preferred embodiments, all the tubular modules making up the tubular guide are identical, except for the elements eventually arranged on the outer surface of the tubular wall thereof, and are mutually coupled by pressure in the axial direction. This solution allows having a single tubular module model for assembling a tubular guide of any length easily.

In preferred embodiments, at least some of the tubular modules comprise a ring formed on the outer surface of the tubular wall thereof. This ring allows securing the tubular guide to external elements such as, for example, to a structure using a tie which is passed through the ring. This possibility is particularly useful for securing tubular guides in data centers.

Preferably, the tubular guide is coupled to a connecting part for connecting said tubular guide to another cable conduction structure such as, for example, a cable tray, from which cables guided in the continuous conduit of said tubular guide must emerge, said connecting part comprising a base, a through opening in said base for the passage of the cables, and a tubular segment extending from said base, in the perimeter of said through opening, and having the same shape as an end segment of said tubular modules, such that a tubular module at one end of the tubular guide is coupled to said tubular segment of the connecting part in the same manner as it is coupled to another tubular module. The tubular segment and the base comprise a continuous through groove which, in the open position of the tubular guide, is aligned with the through grooves of all the tubular modules of said tubular guide and prolongs the continuous cable-passage groove. The connecting part comprises fixing means for fixing said connecting part to the other cable conduction structure. This configuration allows inserting a cable laterally in the conduit of the tubular guide, through the cable-passage groove and the through groove of the connecting part, when the tubular guide is connected by means of said connecting part to a structure from which the cables conducted through the tubular guide emerge through the through opening, and this without having to disconnect the tubular guide.

In the preferred applications, the other cable conduction structure to which the tubular guide is connected through the connecting part is a cable tray.

The invention also comprises other detail features shown in the following detailed description of the embodiments of the invention and in the attached figures.

### Brief Description of the Drawings

The advantages and features of the invention will become apparent from the following description in which preferred embodiments of the invention are described, in a non-limiting manner with respect to the scope of the main claim, in reference to the figures
Figure 1 is a perspective view of an embodiment of the tubular guide, in the open and compacted position.
Figure 2 is a perspective view of the tubular guide, in a closed, extended, and straight position.
Figure 3 is a partial enlarged view of the tubular guide in the position of Figure 1.
Figure 4 is a partial enlarged view of the tubular guide in the position of Figure 2.
Figure 5 is a partial enlarged sectional view of the tubular guide in the position of Figure 1.
Figure 6 is a partial enlarged sectional view of the tubular guide in the position of Figure 2.
Figure 7 is a partial enlarged sectional view of the tubular guide in the position of Figure 2, with greater enlargement, showing the retention area between two tubular modules.
Figure 8 is a perspective view of the tubular guide, in a closed, extended, and curved position.
Figure 9 is a perspective view like the one of Figure 1, from another angle.
Figures 10, 11, and 12 are three perspective views of a tubular module, from three different angles.
Figure 13 is a sectional perspective view of the tubular module.
Figure 14 is a top view of the tubular module.
Figure 15 is a bottom view of the tubular module.
Figures 16 and 17 are perspective views of the tubular guide coupled to a connecting part, from two different angles.
Figures 18 and 19 are perspective views of the connecting part, from two different angles.

### Detailed Description of Embodiments of the Invention

The extendable tubular guide 1 for cables described below by way of non-limiting example is mainly applied for guiding bundles of optic fiber cables in data centers.

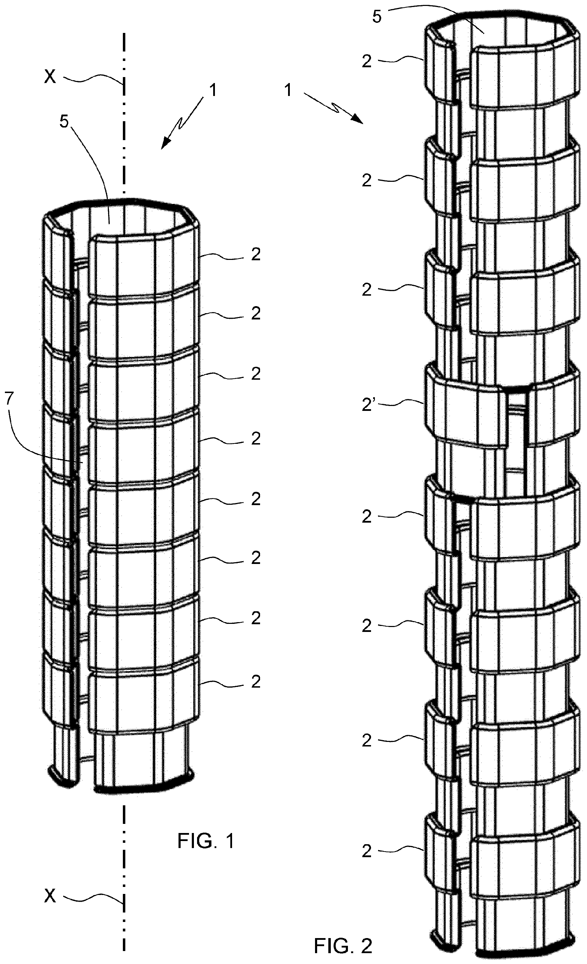

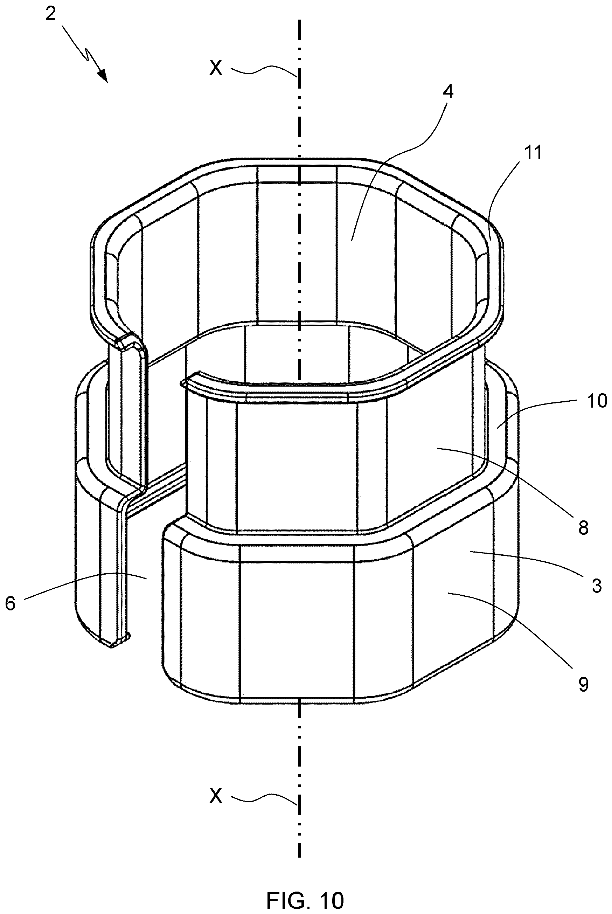

As shown in Figures 1 and 2, the tubular guide 1 is formed by a plurality of tubular modules 2 mutually coupled in series along an axial direction X. The axial direction X referred to is the longitudinal direction of the tubular guide 1 formed by the mutually coupled tubular modules 2 arranged such that the tubular guide 1 extends longitudinally in a straight line, as shown in Figure 1. When reference is made to a single tubular module 2, the axial direction X is the longitudinal direction of said tubular module 2, as shown in Figure 10. It is the same direction as that shown in Figure 1 for the tubular guide 1 formed by a plurality of mutually coupled tubular modules 2.

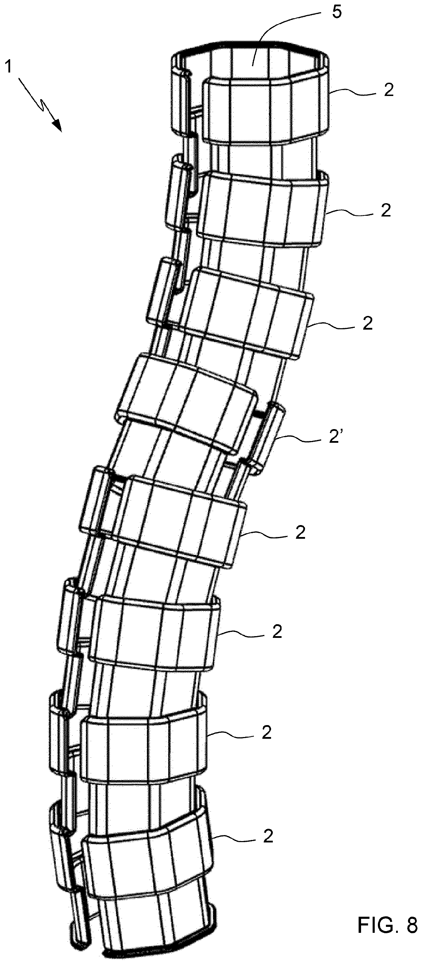

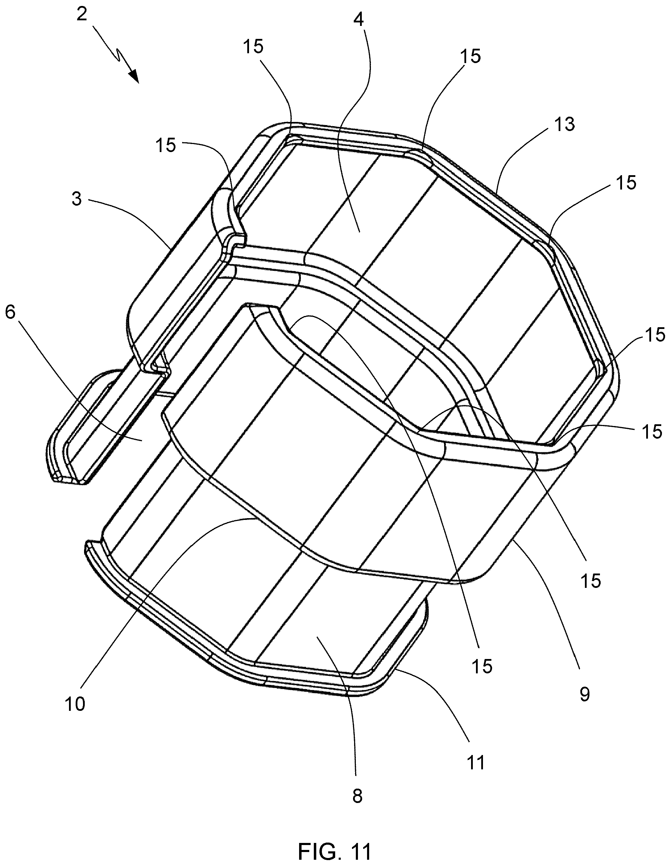

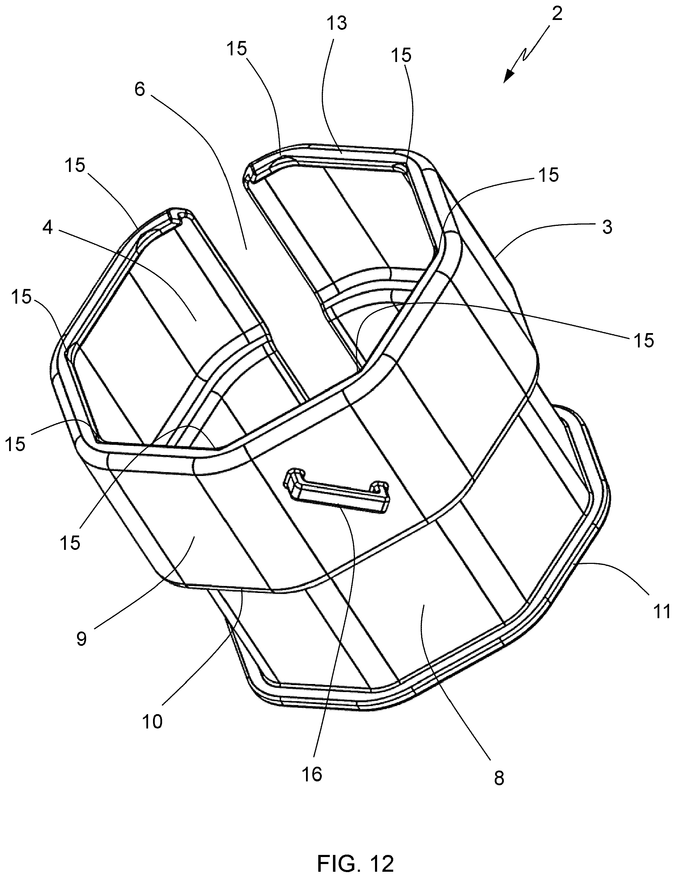

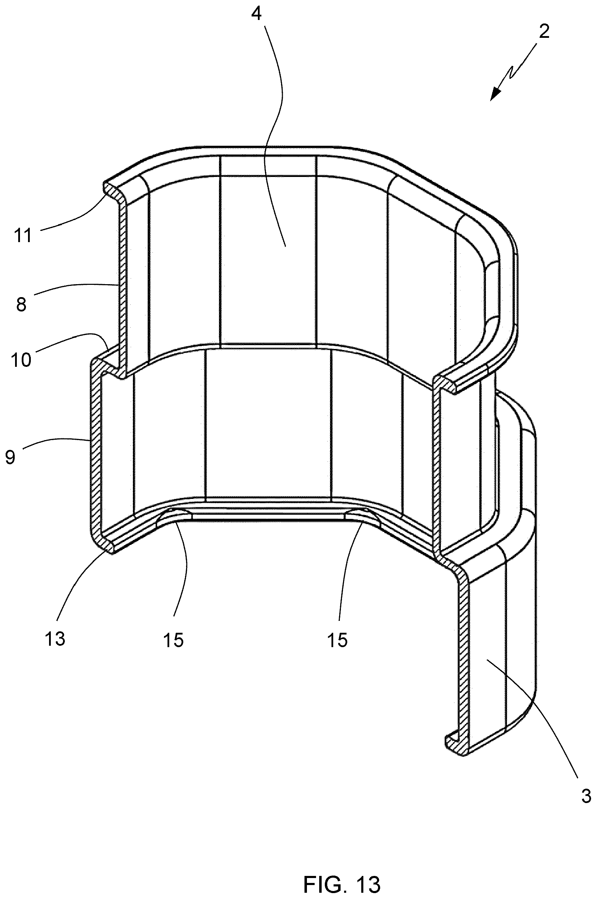

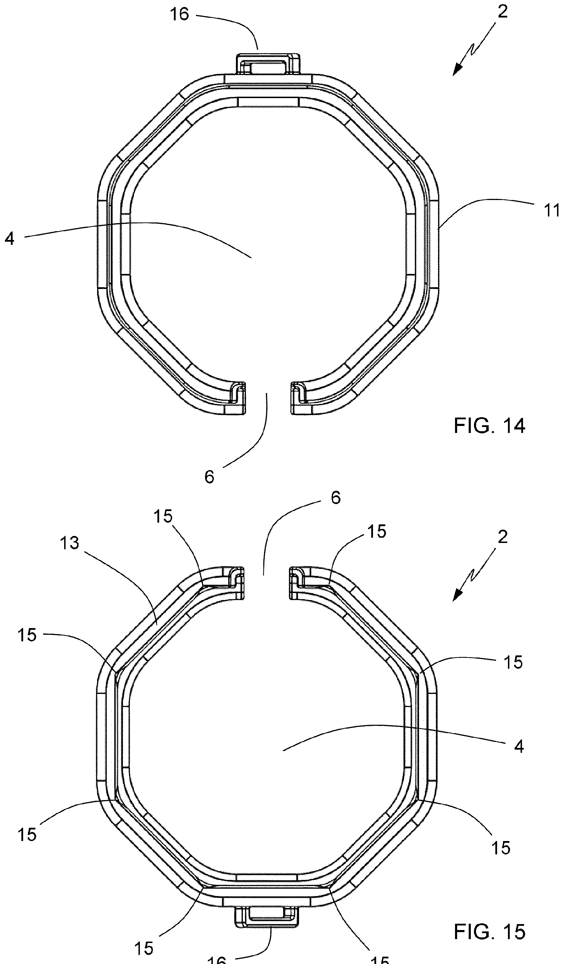

Each of the tubular modules 2 comprises a tubular wall 3 delimiting a conduit segment 4 for cables, as will be described below in reference to Figures 10 to 15. Successive conduit segments 4 of the mutually coupled tubular modules 2 form a continuous conduit 5 for cables extending along the entire length of the tubular guide 1. Each of the mutually coupled tubular modules 2 can pivot in a limited manner with respect to the adjacent tubular module 2 to which it is coupled, so as to curve the tubular guide 1. Figure 8 shows the tubular guide 1 curved as a result of the pivoting of the tubular modules 2. Furthermore, each of the mutually coupled tubular modules 2 can move in a limited manner in the axial direction X with respect to the adjacent tubular module 2 to which it is coupled, so as to extend the length of the tubular guide 1. Figure 1 shows a compacted position of the tubular guide in the axial direction X, whereas Figure 2 shows an expanded position in the axial direction X, as a result of the movement of the tubular modules in this direction.

In the described embodiment, all the tubular modules 2 are identical and mutually coupled by pressure in the axial direction X. Each tubular module is made of a single part and from a polymeric material such as, for example, PVC (polyvinyl chloride) or ABS (acrylonitrile-butadiene-styrene).

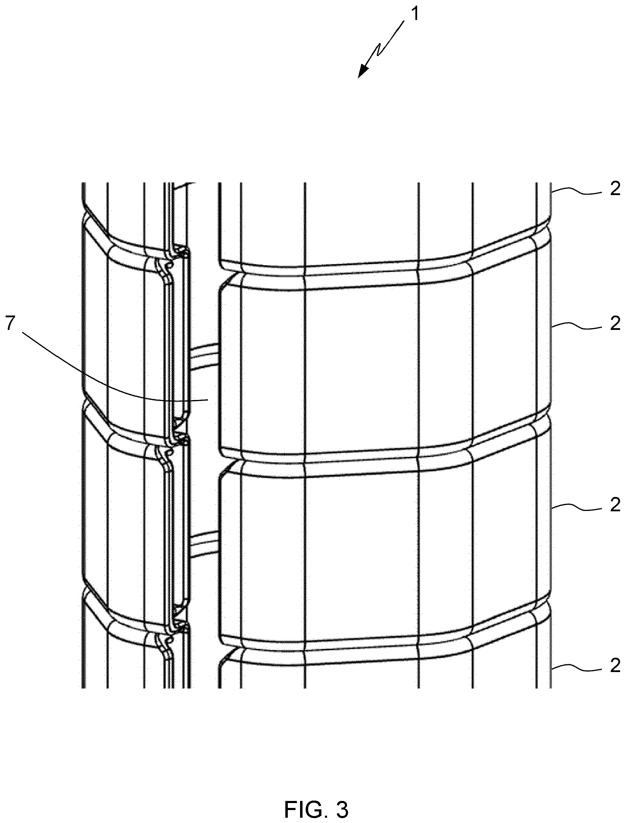

As shown in Figures 10 to 15, each tubular module 2 has a tubular wall 3 delimiting a conduit segment 4 for cables. The tubular wall 3 comprises a first coupling segment 8 and a second coupling segment 9, which is adjacent to the first coupling segment 8 and having the same length as said first coupling segment in the axial direction X. The first coupling segment 8 and the second coupling segment 9 are joined by a shoulder 10 which increases the radial dimension of the second coupling segment 9 with respect to the radial dimension of the first coupling segment 8. The tubular wall 3, including the two coupling segments 8 and 9, has, in a section orthogonal to the axial direction X, an octagonal shape with rounded vertices. The sectional shape of the first coupling segment 8 corresponds to the sectional shape of the second coupling segment 9 and has a smaller dimension, such that the first coupling segment 8 of each tubular module 2 fits into the second coupling segment 9 of the adjacent tubular module 2 in the axial direction X by shape complementarity. The coupling between the adjacent tubular modules 2 is shown in greater detail in Figures 3 to 7.

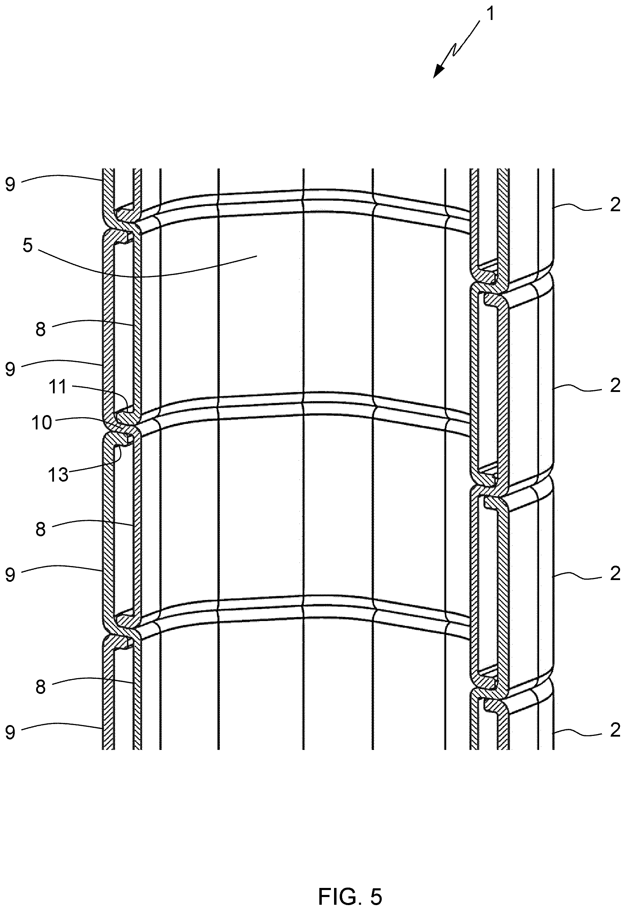

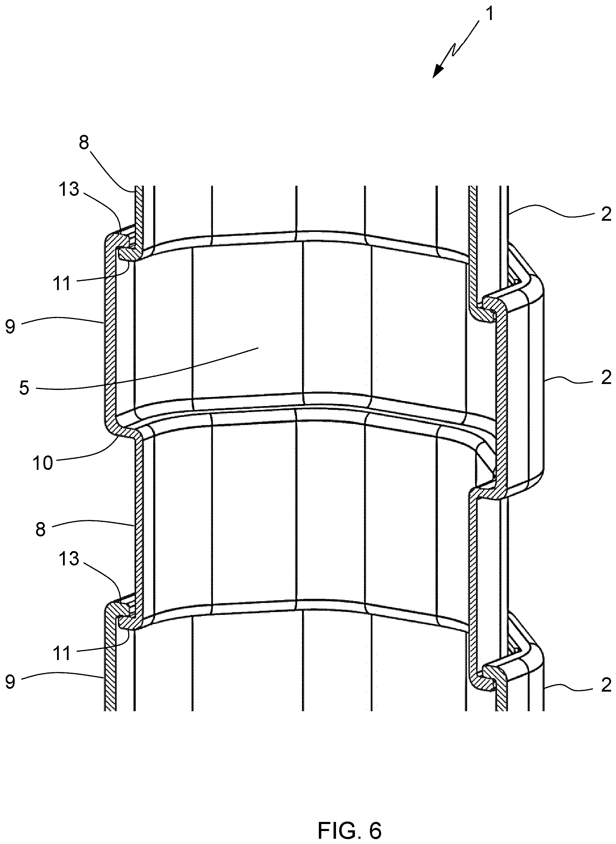

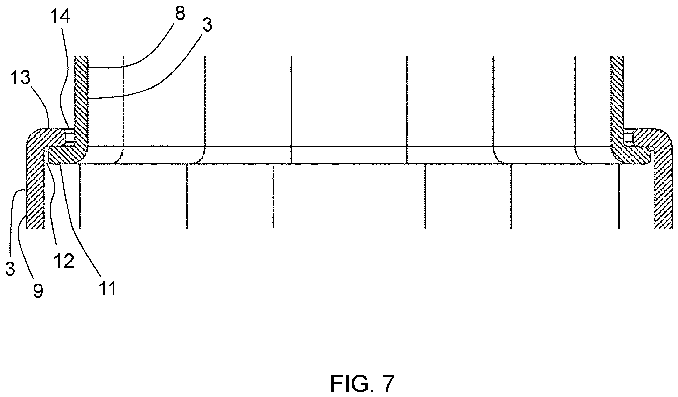

The first coupling segment 8 has at its end a first rim 11 projecting radially outwards. As can be seen in Figure 7, this first rim 11 is separated, by a gap 12, from the tubular wall 3 of the second coupling segment 9 of the adjacent tubular segment 2 on one side. The second coupling segment 9 has at its end a second rim 13 projecting radially inwards. Furthermore, as can be seen in Figure 7, this second rim 13 is separated, by a gap 14, from the tubular wall 3 of the first coupling segment 8 of the adjacent tubular segment 2 on the other side. These gaps 12, 14 allow a limited pivoting of the mutually coupled tubular modules 2, so as to curve the tubular guide 1 as shown in Figure 8. Furthermore, as shown in Figure 5, in the compacted position of the tubular guide 1 in the axial direction X, the first rim 11 of an adjacent tubular module 2 on one side and the second rim 13 of another adjacent tubular module 2 on the other side, respectively, rest abutting the shoulder 10 of one and the same tubular module 2 in the axial direction X, each on an opposite side of said shoulder 10. Therefore, the shoulder 10, in cooperation with the first rim 11 and the second rim 13, performs the function of a first travel stop for the tubular modules 2 in the axial direction X, thereby defining a minimum length of the tubular guide 1. As shown in Figure 6, in an expanded position of the tubular guide 1 in the axial direction X, the first rim 11 of a tubular module 2 rests abutting the second rim 13 of an adjacent tubular module 2 in the axial direction X. The first rim 11 and the second rim 13 cooperate to perform the function of a second travel stop for the tubular modules 2 in the axial direction X, thereby defining a maximum length of the tubular guide 1.

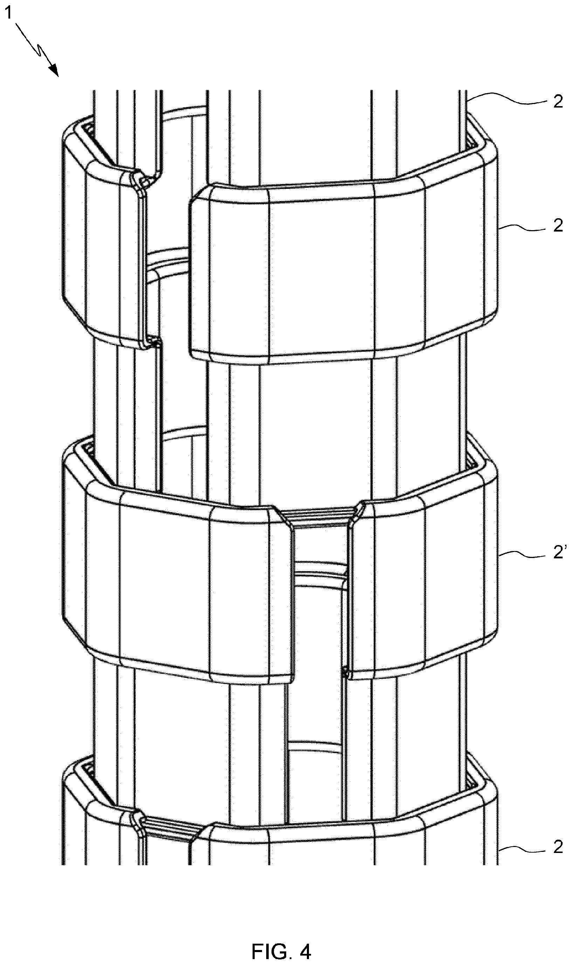

Advantageously, to allow the introduction of cables in the continuous conduit 5 of the tubular guide 1, each of the tubular modules 2 comprises a continuous through groove 6, extending in the axial direction X and going through the tubular wall 3 along the entire length of said tubular module 2. In the open position shown in Figure 1, the through grooves 6 of all the mutually coupled tubular modules 2 are aligned forming a continuous cable-passage groove 7 along the entire length of the tubular guide 1. The tubular wall of each tubular module 2 is sized such that its sectional shape deforms elastically, due to the play provided by the through groove 6. This elastic deformation allows each of the mutually coupled tubular modules 2 to be able to perform a relative rotation, about the axial direction X, with respect to the adjacent tubular module 2 to which it is coupled. The user can thereby perform a relative rotation of one or more of the tubular modules 2, forcibly rotating with his/her hand the tubular module 2 to another relative angular position in which the first coupling segment 8 is again fitted with the second coupling segment 9 of an adjacent tubular module 2 by shape complementarity. All these relative angular positions are stable positions due to the fitting of the first coupling segment 8 of a tubular module 2 into the second coupling segment 9 of the adjacent tubular module 2 by shape complementarity. In the described embodiment in which the tubular wall 3 has a regular octagonal prism shape, the user rotates the tubular module 2 one-eighth of a turn to transition from one fitting position to the next. By rotating at least one of the tubular modules 2 relatively, the tubular guide 1 transitions to a closed position, such as the one shown in Figures 2 and 4, in which the through groove 6 of the tubular module 2' that has been rotated is not aligned with the through grooves 6 of the other tubular modules 2. The tubular wall 3 of the tubular module 2' that has been rotated interrupts the continuity of the cable-passage groove 7. In this closed position of the tubular guide 1, it is not possible to introduce or remove cables laterally in or from the continuous conduit 5.

To allow mutually coupling the tubular modules 2 by pressure, the second rim 13 is formed such that it deforms elastically to introduce the first coupling segment 8 into the second coupling segment 9. To that end, the first rim 11 of a tubular module 2 in the axial direction X is passed through the ring formed by the second rim 13 of another tubular module 2. To facilitate this elastic deformation, the second rim 13 has notches 15 formed in the rounded vertices of the regular octagon.

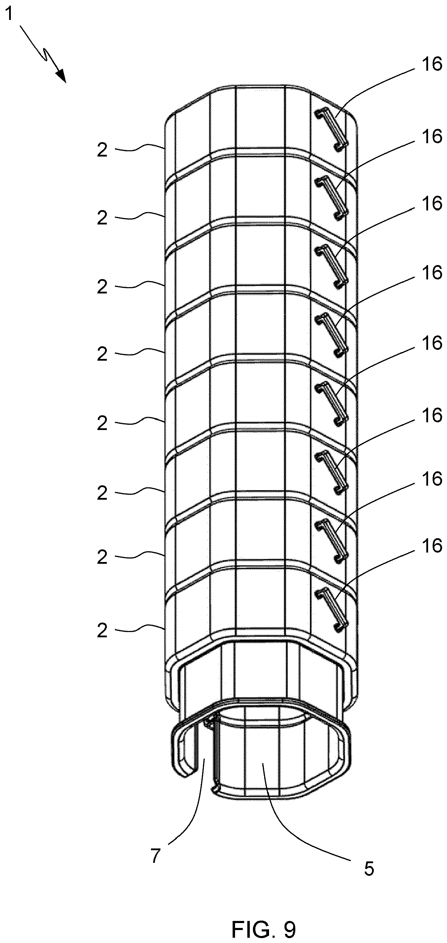

Optionally, as can be seen in Figures 9, 12, 14, and 15, the tubular modules 2 comprise a ring 16 formed on the outer surface of the tubular wall 3 thereof. The ring 16 allows securing the tubular guide 1 to a structure using a tie which is passed through said ring 16. In the embodiment described in the figures, all the tubular modules 2 have the ring 16. Other embodiments in which only some of the tubular modules 2 have the ring 16 are possible.

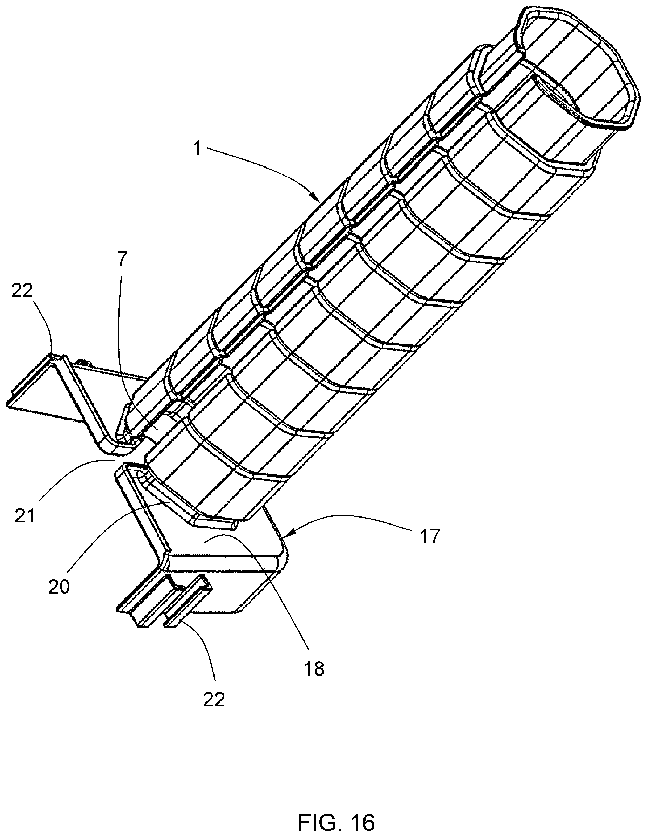

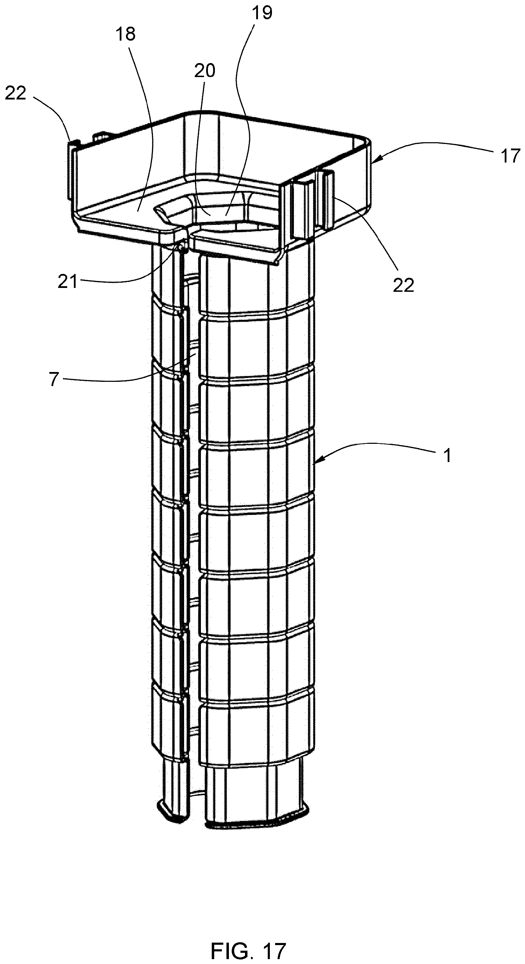

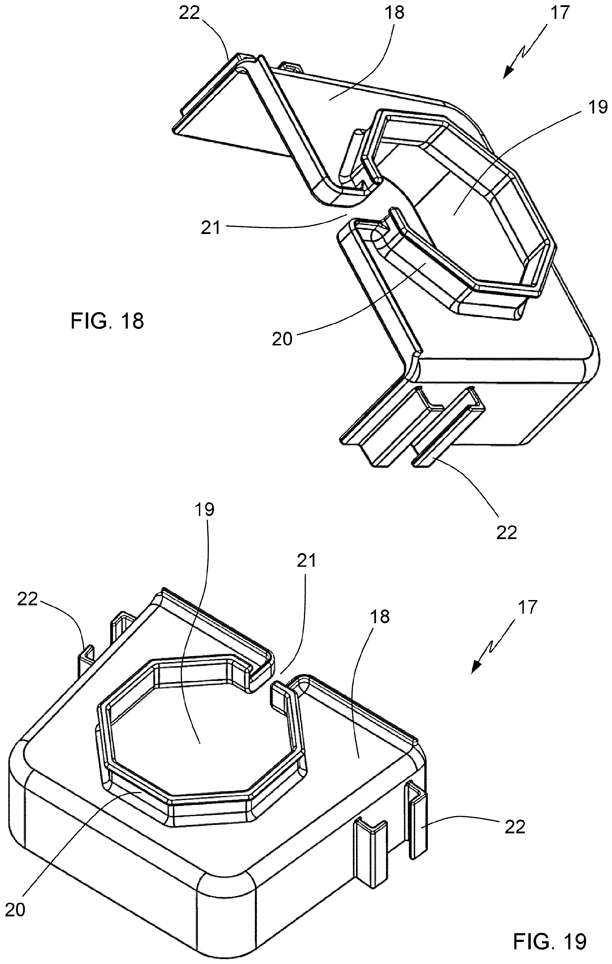

Advantageously, the tubular guide 1 can be coupled to a connecting part 17, as shown in Figures 16 to 19. This connecting part 17 is used to connect the tubular guide 1 to another cable conduction structure, particularly to a cable tray, from which cables guided in the continuous conduit 5 of said tubular guide 1 must emerge. The connecting part 17 comprises a base 18 and fixing means 22 for fixing said connecting part 17 to the other cable conduction structure. In the embodiment shown in the figures, the fixing means 22 are rails which cooperate with complementary fixing means provided in the other cable conduction structure. In the described example, this other cable conduction structure is a cable tray (not shown in the figures) to which the tubular guide 1 is connected through the connecting part 17. The base 18 has a through opening 19 for the passage of the cables, and a tubular segment 20 extending from said base 18, in the perimeter of said through opening 19. The tubular segment 20 has the same shape as an end segment of the first coupling segment 8 of the tubular module 2, such that a tubular module 2 at one end of the tubular guide 1 is coupled to said tubular segment 20 in the same manner as it is coupled to another tubular module 2. The tubular segment 20 and the base 18 comprise a continuous through groove 21 having the same width as the through groove 6 of the tubular modules 2. In the open position of the tubular guide 1, the through groove 21 is aligned with the through grooves 6 of all the tubular modules 2 of the tubular guide 1, such that it prolongs the continuous cable-passage groove 7 of the tubular guide 1. This allows introducing cables laterally in the continuous conduit 5 of the tubular guide 1, through the cable-passage groove 7 and through the through opening 19, without having to disconnect the tubular guide 1 of the other cable conduction structure which, in the described example, is a cable tray.

Preferably, the connecting part 17 is made of a single part and from a polymeric material such as, for example, PVC (polyvinyl chloride) or ABS (acrylonitrile-butadiene-styrene).

## Claims

1. An extendable tubular guide (1) for cables, formed by a plurality of tubular modules (2) mutually coupled in series along an axial direction (X), each of said tubular modules (2) comprising a tubular wall (3) delimiting a conduit segment (4) for cables, said conduit segments (4) of the mutually coupled tubular modules (2) forming a continuous conduit (5) for cables along the entire length of said tubular guide (1), and each of said mutually coupled tubular modules (2) being able to pivot in a limited manner with respect to the adjacent tubular module (2) to which it is coupled, so as to curve said tubular guide (1), and being able to move in a limited manner in said axial direction (X) with respect to the adjacent tubular module (2) to which it is coupled, so as to extend the length of said tubular guide (1); **characterized in that** each of said tubular modules (2) comprises a continuous through groove (6), extending in the axial direction (X) and going through said tubular wall (3) along the entire length of said tubular module (2), and **in that** said tubular modules (2) are formed such that each of said mutually coupled tubular modules (2) can perform a relative rotation, about the axial direction (X), with respect to the adjacent tubular module (2) to which it is coupled, said relative rotation of the tubular modules (2) allowing at least two positions of said tubular guide (1): an open position, in which said through grooves (6) of all the mutually coupled tubular modules (2) are aligned forming a continuous cable-passage groove (7) along the entire length of the tubular guide (1); and at least one closed position, in which a relative rotation of at least one module (2') of said tubular modules (2) has been performed, such that the through groove (6) of the tubular module (2') that has been rotated is not aligned with the through grooves (6) of the other tubular modules (2), and such that the tubular wall (3) of the tubular module (2') that has been rotated interrupts the continuity of said cable-passage groove (7).

2. The tubular guide (1) according to claim 1, **characterized in that** the tubular wall (3) of each of said tubular modules (2) comprises a first coupling segment (8) and a second coupling segment (9), opposite said first coupling segment (8), having a shape, in a section orthogonal to the axial direction (X), corresponding to the shape of said first coupling segment, said first coupling segment (8) of each tubular module (2) being fitted into said second coupling segment (9) of the adjacent tubular module (2) in the axial direction (X); and **in that** said first coupling segment (8) and said second coupling segment (9) have fitting portions formed such that said open position and said closed position of the tubular guide are, each, a stable position, and such that said fitting portions elastically deform, as a result of said relative rotation of at least one (2') of said tubular modules (2), to transition from said open position to said closed position and vice versa.

3. The tubular guide (1) according to claim 2, **characterized in that** said first coupling segment (8) has a non-circular shape, in a section orthogonal to the axial direction (X), and said second coupling segment (9) has a non-circular shape, in a section orthogonal to the axial direction (X), corresponding to the shape of said first coupling segment (8), said fitting portions being said first coupling segment (8) and said second coupling segment (9) with the first segment (8) fitted into the second segment (9)by shape complementarity; and **in that** the tubular wall (3) of said tubular modules (2) is sized such that its sectional shape deforms elastically, due to the play provided by the through groove (6), as a result of said relative rotation of at least one module (2') of said tubular modules (2), to transition from said open position to said closed position and vice versa.

4. The tubular guide (1) according to claim 3, **characterized in that** said non-circular shape of the first coupling segment (8) and of the second coupling segment (9) is a regular polygon with rounded vertices.

5. The tubular guide (1) according to claim 4, **characterized in that** said regular polygon is an octagon with rounded vertices.

6. The tubular guide (1) according to any one of claims 2 to 5, **characterized in that** said first coupling segment (8) and said second coupling segment (9) in each tubular module (2) are adjacent to one another, have the same length in the axial direction (X), and are joined by a shoulder (10) which increases the radial dimension of said second coupling segment (9) with respect to the radial dimension of said first coupling segment (8); said first coupling segment (8) has at its end a first rim (11) projecting radially outwards, said first rim (11) being separated, by a first gap (12), from the tubular wall (3) of the second coupling segment (9) of the adjacent tubular segment (2) on one side; said second coupling segment (9) has at its end a second rim (13) projecting radially inwards, said second rim (13) being separated, by a second gap (14), from the tubular wall (3) of the second coupling segment (9) of the adjacent tubular segment (2) on the other side; such that in a compacted position of said tubular guide (1) in the axial direction (X), said first rim (11) of an adjacent tubular module (2) on one side rests abutting one side of said shoulder (10) of a tubular module (2) in the axial direction (X), and said second rim (13) of an adjacent tubular module (2) on the other side rests abutting the other side of the same shoulder (10) in the axial direction (X); and in an expanded position of said tubular guide (1) in the axial direction (X), said first rim (11) of a tubular module (2) rests abutting said second rim (13) of an adjacent tubular module (2) in the axial direction (X).

7. The tubular guide (1) according to claim 6, **characterized in that** said second rim (13) is formed such that it deforms elastically to introduce said first coupling segment (8) into said second coupling segment (9), causing said first rim (11) to go through the ring formed by said second rim (13).

8. The tubular guide (1) according to claim 7, **characterized in that** said second rim (13) has notches (15) to facilitate the elastic deformation thereof.

9. The tubular guide (1) according to claims 4 and 8, **characterized in that** said notches (15) are formed in the rounded vertices of the regular polygon.

10. The tubular guide (1) according to any one of claims 1 to 9, **characterized in that** all the tubular modules (2) making up said tubular guide (1) are identical, except for the elements eventually arranged on the outer surface of the tubular wall (3) thereof, and are mutually coupled by pressure in the axial direction (X).

11. The tubular guide (1) according to any one of claims 1 to 10, **characterized in that** at least some of said tubular modules (2) comprise a ring (16) formed on the outer surface of the tubular wall (3) thereof.

12. The tubular guide (1) according to any one of claims 1 to 11, **characterized in that** it is coupled to a connecting part (17) for connecting said tubular guide (1) to another cable conduction structure from which cables guided in the continuous conduit (5) of said tubular guide (1) must emerge, said connecting part (17) comprising a base (18), a through opening (19) in said base (18) for the passage of the cables, and a tubular segment (20) extending from said base (18), in the perimeter of said through opening (19), and having the same shape as an end segment of said tubular modules (2), such that a tubular module (2) at one end of said tubular guide (1) is coupled to said tubular segment (20) in the same manner as it is coupled to another tubular module (2); said tubular segment (20) and said base (18) comprising a continuous through groove (21) which, in the open position of said tubular guide (1), is aligned with the through grooves (6) of all the tubular modules (2) of said tubular guide (1) and prolongs said continuous cable-passage groove (7); and said connecting part (17) comprising fixing means (22) for fixing said connecting part (17) to said cable conduction structure.
